# EUROPEAN PATENT APPLICATION

(11) **EP 4 779 356 A1**
(43) Date of publication of application: **22.07.2026**
(21) Application number: 26151357.6
(22) Date of filing: 12.01.2026
(51) Int. Cl.: G01S 13/76, G01S 7/00

(54) **SYSTEMS AND METHODS FOR IMPROVING ROUND-TRIP TIME MEASUREMENTS IN WIRELESS COMMUNICATION NETWORKS**

(30) Priority: 15.01.2025 US 202519022575
(71) Applicant: Avago Technologies International Sales Pte. Limited, Singapore 768923 (SG)
(72) Inventor: BANDARU, Yogesh, Irvine, 92618 (US); SOMARAJU, Dasam, Irvine, 92618 (US); MALLADI, Raghavendra, Irvine, 92618 (US); DAVE, Devang, Irvine, 92618 (US); KAMATH, Manoj RAVEENDRANATH, Irvine, 92618 (US); TADAHAL, Shivkumar, Irvine, 92618 (US); GUPTA, Raghvendra, Irvine, 92618 (US)
(74) Representative: Dilg, Haeusler, Schindelmann Patentanwaltsgesellschaft mbH

(57) **Abstract**

The disclosure describes systems and methods for improving round-trip time (RTT) measurement in wireless communication networks. An initiating station (ISTA) can transmit a null data packet announcement (NDPA) frame to a responding station (RSTA) for a first burst, causing the RSTA to skip transmitting a location measurement report (LMR) frame for that burst. The ISTA can transmit an initiator-to-responder (I2R) NDP frame to the RSTA and receive a responder-to-initiator (R2I) NDP frame from the RSTA after the first burst. The RSTA can generate the LMR frame for a second burst in response to the R2I NDP frame. For a last burst, the ISTA can transmit the NDPA frame to the RSTA, causing the RSTA to skip exchanging I2R and R2I NDP frames between the ISTA and the RSTA. The ISTA can receive the LMR frame from the RSTA during the last burst and determine the RTT.

## Description

### FIELD OF THE DISCLOSURE

This disclosure generally relates to systems and methods for wireless communication between access points and wireless communication devices, including, without limitation, improving round-trip time (RTT) measurements by reducing the frame exchanges during RTT bursts.

### BACKGROUND

The market for wireless communications devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to improving round-trip time (RTT) measurements in wireless communication networks. RTT is the time it takes for a signal to travel from a source to a destination and back again. In wireless local area networks (WLANs), a location measurement report (LMR) frame can be used to report timing information based on RTT measurements. However, challenges related to processing delays and incomplete data transmission can impede the reliability and utility of the reported timing information. One such technical challenge can be processing delays to get the timestamps to include in LMR. In delayed LMR operation, an LMR frame transmission can occur after a short interframe space (SIFS) gap to accommodate the processing desired for timestamp calculation. Consequently, the first LMR frame (LMR_1) may not include any timing information. Instead, subsequent LMR frames can carry timing information from the preceding burst. Specifically, LMR_2 frame can include timestamps from initiator-to-responder (I2R_1) and responder-to-initiator (R2I_1) frame exchanges, and in general, LMR_n frame can carry timestamps from I2R_(n-1) and R2I_(n-1). This delay can arise because the timestamps captured during the responding station (RSTA)'s transmission to the initiating station (ISTA) are not immediately available for inclusion in the LMR frame.

A technical challenge in multi-burst ranging configurations arises from how timing information is handled in the final burst. While the final burst includes an LMR frame, the timing measurements from the final I2R and R2I frame exchanges are not included in this report. These final I2R and R2I frame exchanges are therefore insignificant for the overall ranging measurement because the timing calculated using those frames is not carried in any frame later.

Furthermore, the wireless communication systems can enhance an NDP announcement (NDPA) frame to indicate whether all ranging-related frames are exchanged within a burst, or whether the initiator can enhance the frame exchange to reduce overhead. An NDP (null data packet) frame, also known as a null data PPDU (PLCP protocol data unit), is a physical layer (PHY) frame in wireless communication systems that includes a preamble and a PHY header but contains no MAC protocol data unit (MPDU) or payload data. These frames are used for channel sounding and beamforming training. Channel sounding uses the NDP frames to measure channel characteristics without transmitting user data. An NDP announcement (NDPA) frame is a control frame used to signal the upcoming transmission of one or more NDP frames. The NDPA frame informs receiving devices that channel sounding or beamforming training is about to occur, allowing them to prepare for the subsequent NDP transmissions. An NDPA frame can be used in conjunction with NDP frames. The duration of I2R and R21 NDP frames can also be determined based on the number of high efficiency long training field (HE-LTF) repetitions. As specified in 802.11az, up to 8 HE-LTF repetitions per spatial stream (Nss) can be supported, with each HE-LTF field having a duration of 8 microseconds (µs). Therefore, the maximum duration taken by HE-LTF repetitions can be calculated as (8 ps) x (Nss) x (8) = (64 x Nss) µs. For example, with Nss = 2, the maximum duration can be 128 µs, and with Nss = 8, the maximum duration can be 512 µs. This variation in frame duration can impact medium utilization, which can refer to the percentage of time that is used for successful transmission. As a result, the wireless communication systems can encounter challenges related to processing delays in initial LMR frame reporting, incomplete data in final burst timing information, and variable medium utilization due to HE-LTF repetition lengths.

The technical solutions disclosed herein can overcome inefficiencies in frame exchanges within delayed location measurement report (LMR), such as excess overhead and increased latency in RTT measurements, by reducing the frame exchanges during RTT bursts. These improvements include changes in how bursts are processed, with modifications to the first and last bursts to avoid redundant data exchanges, thus enhancing overall system performance and the accuracy of RTT measurements. In this regard, the technical solutions can incorporate adjustments to the frame exchange sequence based on a null data packet (NDP) announcement frame. For example, the networking environment can facilitate an enhanced frame exchange procedure that focuses on minimizing frame exchanges by skipping communicating the first burst LMR frame and the last burst I2R and R2I exchanges. Skipping communication can refer to intentionally omitting certain data exchanges to streamline the process and reduce overhead. Specifically, the NDPA frame transmitted in the first burst can indicate that the LMR frame is skipped or omitted in that burst, as the LMR frame in the first burst may not carry any valid timing information related to RTT measurements. These solutions can reduce latency associated with redundant LMR frame transmissions by eliminating an unnecessary frame or a redundant frame exchange in the first burst. Additionally, the NDPA transmitted in the last burst can indicate that I2R and R2I exchanges are omitted. In such configurations, the RSTA can transmit the LMR frame in the last burst after receiving the NDPA from the ISTA. By skipping the I2R and R2I exchanges in the final burst, the technical solutions can address latency that may result from these exchanges, particularly in situations involving partial device operations where these exchanges may have limited utility for RTT measurements. If no LMR frame is received by the ISTA in the last burst before the burst is complete, the burst can be treated as a failure, prompting the system to take corrective actions, such as triggering retransmission or other actions to facilitate accurate RTT measurements.

The technical solutions described herein can contribute to power efficiency during RTT measurements by minimizing the number of frame exchanges, particularly by omitting or skipping I2R and R2I NDP frames in the last burst. I2R and R2I NDP frames, with their multiple HE-LTF repetitions, can contribute to power consumption during the ranging process. The 802.11az standard can support up to 8 HE-LTF repetitions per frame, with each repetition lasting 8 microseconds (µs). For example, in configurations with two spatial streams (Nss = 2), the maximum duration of HE-LTF repetitions in a single frame can reach 128 µs. By eliminating the power-intensive frames, the disclosed solutions can substantially improve the power efficiency of devices, which can be beneficial for battery-powered devices, IoT devices with energy harvesting constraints, and devices operating in power-saving modes. Moreover, reducing the number of frame transmissions can minimize the time spent in active transmission mode, further contributing to power savings. The power efficiency gains can be particularly beneficial in environments where power consumption is a major concern, such as in mobile devices or when devices are simultaneously running other resource-intensive applications.

In some cases, the networking environment can implement a ranging frame exchange procedure where the first burst LMR frame can be used for various operational purposes, including secure ranging operations, data synchronization, and quality of service monitoring, among others. In a non-limiting example, the first burst LMR frame can be included if it carries information relevant to secure ranging, allowing security-related information to be transmitted while still contributing to RTT measurement processes. Additionally, the NDPA frame transmitted in the last burst can indicate that I2R and R2I frame exchanges are omitted, reducing frame exchanges and associated latency at the end of the ranging procedure. The RSTA can transmit the LMR frame in the last burst after receiving the NDPA from the ISTA. If no LMR frame is received by the ISTA before the last burst concludes, the burst can be treated as a failure to facilitate accurate RTT measurements by prompting error handling procedures. This selective inclusion of the first burst LMR frame, combined with the NDPA-based implementation of the last burst, can provide flexibility to support both secure and nonsecure ranging while minimizing latency and maximizing efficiency. Furthermore, the implementation of a custom NDPA frame can allow the networking environment to dynamically adapt the frame exchange sequence based on the specific ranging demands for RTT measurements, further enhancing adaptability and resource utilization.

At least one aspect of the technical solutions is directed to a system of improving round-trip time measurements in wireless communication networks. The system can include an initiating station (ISTA). The ISTA can include one or more processors coupled with memory. The ISTA can transmit, to a responding station (RSTA), for a first burst of a measurement sequence, a null data packet announcement (NDPA) frame to cause the RSTA to skip communicating, to the ISTA, a location measurement report (LMR) frame for the first burst. The ISTA can transmit, to the RSTA, during one or more bursts after the first burst of the measurement sequence, an initiator-to-responder (I2R) NDP frame. The ISTA can receive, from the RSTA, during the one or more bursts after the first burst, a responder-to-initiator (R2I) NDP frame responsive to the I2R NDP frame. The ISTA can transmit, to the RSTA, for a last burst of the measurement sequence, the NDPA frame to cause the RSTA to skip communicating the I2R and R2I NDP frames exchange between the ISTA and the RSTA for the last burst. The ISTA can receive, from the RSTA, during the last burst, the LMR frame for the last burst. The ISTA can determine, in response to receiving the LMR frame for the last burst, a round-trip time (RTT) between the ISTA and the RSTA.

In some embodiments, the ISTA can provide, in the NDPA frame, an indicator that, upon identification, causes the RSTA to skip the LMR frame communication for the first burst. In some embodiments, the ISTA can provide, in the NDPA frame, an indicator that, upon identification, causes the RSTA to skip communicating the I2R and R2I NDP frames. In some embodiments, the ISTA can transmit the I2R NDP frame with a timing offset corresponding to a short interframe space (SIFS) gap relative to the transmission of the NDPA frame. In some embodiments, where the LMR frame includes timing information, the ISTA can determine the RTT between the ISTA and RSTA based on the timing information. In some embodiments, the ISTA can determine the timing information using time of flight (TOF) time difference of arrival and phase measurement. In some embodiments, the LMR frame for a second burst can include timing information of the I2R and R2I NDP frames of the first burst. In some embodiments, the LMR frame for the last burst can include timing information of the I2R and R2I NDP frames of a preceding burst. In some embodiments, the ISTA can transmit, to the RSTA, for the first burst of the measurement sequence, the NDPA frame to cause the RSTA to communicate, to the ISTA, the LMR frame.

Another aspect of the technical solutions is directed to a system of improving round-trip time measurements in wireless communication networks. The system can include a responding station (RSTA). The RSTA can include one or more processors coupled with memory. The RSTA can receive, from an initiating station (ISTA), for a first burst of a measurement sequence, a null data packet announcement (NDPA) frame. The NDPA frame can cause the RSTA to skip communicating, to the ISTA, a location measurement report (LMR) frame for the first burst. The RSTA can receive, from the ISTA, during one or more bursts after the first burst of the measurement sequence, an initiator-to-responder (I2R) NDP frame. The RSTA can transmit, to the ISTA, during the one or more bursts after the first burst, a responder-to-initiator (R2I) NDP frame. The RSTA can generate, in response to receiving the R21 NDP frame, the LMR frame for a second burst. The RSTA can receive, from the ISTA, for a last burst of the measurement sequence, the NDPA frame causing the RSTA to skip communicating the I2R and R2I NDP frames exchange between the ISTA and the RSTA for the last burst. The RSTA can transmit, to the ISTA, during the last burst, the LMR frame for the last burst.

In some embodiments, the RSTA can transmit the R2I NDP frame in response to the I2R NDP frame, where the R2I NDP frame is transmitted with a timing offset corresponding to a short interframe space (SIFS) gap relative to the I2R NDP frame. In some embodiments, the RSTA can provide, in the LMR frame transmitted to the ISTA during the last burst, an indicator indicating the skipping of I2R and R2I NDP frames exchange for the last burst.

Yet another aspect of the technical solutions is directed to a method of improving round-trip time measurements in wireless communication networks. The method can include transmitting, by an initiating station (ISTA) to a responding station (RSTA), a null data packet announcement (NDPA) frame for a first burst of a measurement sequence. The NDPA frame can cause the RSTA to skip communicating, to the ISTA, a location measurement report (LMR) frame for the first burst. The method can include transmitting, by the ISTA to the RSTA, during one or more bursts after the first burst of the measurement sequence, an initiator-to-responder (I2R) NDP frame. The method can include receiving, by the ISTA from the RSTA, during the one or more bursts after the first burst, a responder-to-initiator (R2I) NDP frame responsive to the I2R NDP frame. The method can include, in response to receiving the R2I NDP frame, generating, by the RSTA, the LMR frame for a second burst. The method can include transmitting, by the ISTA to the RSTA, for a last burst of the measurement sequence. The NDPA frame can cause the RSTA to skip communicating the I2R and R2I NDP frames exchange between the ISTA and the RSTA for the last burst. The method can include receiving, by the ISTA from the RSTA, during the last burst, the LMR frame for the last burst. The method can include determining, by the ISTA, a round-trip time (RTT) between the ISTA and the RSTA responsive to receiving the LMR frame for the last burst.

In some embodiments, the method can include providing, in the NDPA frame, an indicator that, upon identification, causes the RSTA to skip the LMR frame communication for the first burst. In some embodiments, the method can include providing, in the NDPA frame, an indicator that, upon identification, causes the RSTA to skip communicating the I2R and R21 NDP frames. In some embodiments, the method can include transmitting the I2R NDP frame with a timing offset corresponding to a short interframe space (SIFS) gap relative to the transmission of the NDPA frame. In some embodiments, the method can include transmitting the R2I NDP frame in response to the I2R NDP frame, wherein the R2I NDP frame is transmitted with a timing offset corresponding to a short interframe space (SIFS) gap relative to the I2R NDP frame. In some embodiments, where the LMR frame includes timing information, the method can include determining the RTT between the ISTA and RSTA based on the timing information. In some embodiments, the LMR frame for the second burst can include timing information of the I2R and R2I NDP frames of the first burst. In some embodiments, the LMR frame for the last burst can include timing information of the I2R and R2I NDP frames of a preceding burst.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A illustrates a block diagram depicting a network environment including one or more access points in communication with one or more devices or stations, in accordance with one or more embodiments.
FIGS. 1B and 1C illustrate block diagrams depicting computing devices useful in connection with the methods and systems described herein, in accordance with one or more embodiments.
FIG. 2 illustrates a block diagram of an example system for improving round-trip time measurements in wireless communication networks, in accordance with one or more embodiments.
FIG. 3 illustrates an example flow diagram of a method for improving round-trip time measurements in wireless communication networks, in accordance with one or more embodiments.
FIGS. 4-6 illustrate example implementations of ranging measurement exchange sequences, in accordance with one or more embodiments.

### DETAILED DESCRIPTION

The following IEEE standard(s), including any draft versions of such standard(s), are hereby incorporated herein by reference in their entirety and are made part of the present disclosure for all these purposes: WiFi Alliance standards and IEEE 802.11 standards, including but not limited to IEEE 802.11a^{™}, IEEE 802.11b^{™}, IEEE 802.11g^{™}, IEEE P802.1In^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment that can be useful for practicing embodiments described herein; and
- Section B describes systems and methods for improving round-trip time measurements in wireless communication networks.

### A. Computing and Network Environment

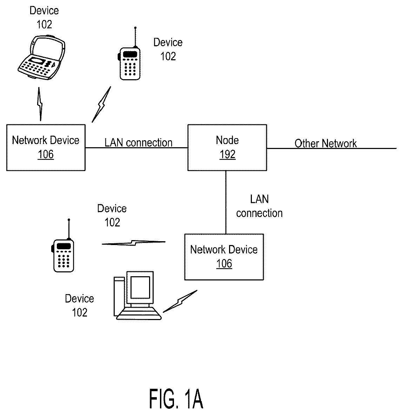

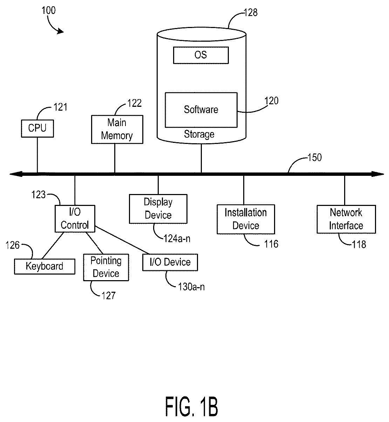

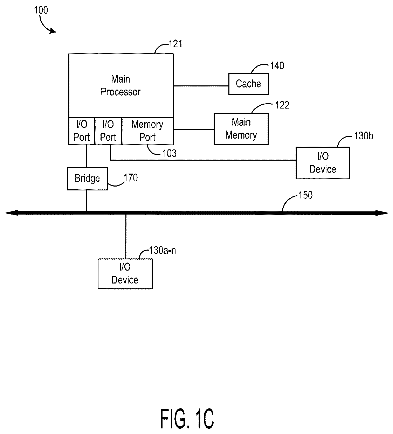

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

**In** some embodiments, a network device 106 or AP includes a device or module (including a combination of hardware and software) that allows wireless communication devices 102 to connect to a wired network using Wi-Fi or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other communication devices 102 to utilize that wired connection. A network device 106 or AP can be implemented to support a standard for sending and receiving data using one or more radio frequencies. Those standards and the frequencies they use can be defined by the IEEE (e.g., IEEE 802.11 standards). A network device 106 or AP can be configured and/or used to support public Internet hotspots, and/or on a network to extend the network's Wi-Fi signal range.

**In** some embodiments, the access points or network devices 106 can be used for (e.g., in-home, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an input/output (I/O) controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more I/O devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with the main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screens, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, a USB device, a hard drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect, or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smartphone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Improving Round-Trip Time Measurements in Wireless Communication Networks

Below are detailed descriptions of various concepts related to, and embodiments of, techniques, approaches, methods, apparatuses, and systems for improving round-trip time measurements in wireless communication networks. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein improve round-trip time (RTT) measurements in wireless communication networks by reducing the exchange of frames between an initiating station (ISTA) and a responding station (RSTA) during RTT bursts. The ISTA can transmit a null data packet announcement (NDPA) frame to the RSTA during the first burst of a measurement sequence, causing the RSTA to skip transmitting a location measurement report (LMR) for that burst. In subsequent bursts, the ISTA can transmit an initiator-to-responder (I2R) null data packet (NDP) frame to the RSTA, and the RSTA can respond with a responder-to-initiator (R2I) NDP frame. The RSTA can generate and transmit an LMR frame for each subsequent burst, including timing data derived from the preceding burst. For the last burst, the ISTA can transmit an NDPA frame to the RSTA, causing the RSTA to skip the exchange of I2R and R2I NDP frames while transmitting the LMR frame for the last burst. The ISTA can process the LMR to determine the RTT based on timing data exchanged during the measurement sequence. Thus, the technical solutions disclosed herein can improve processing delays, enhance resource utilization, and provide accurate timing measurements during RTT determination.

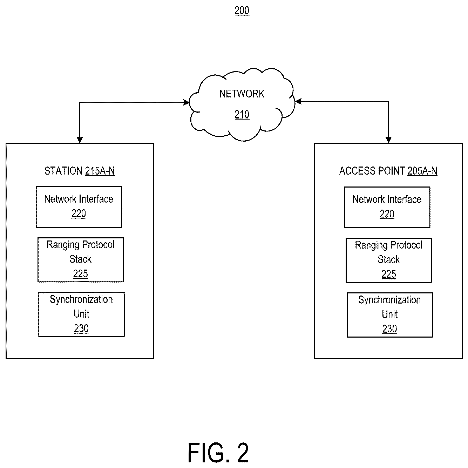

FIG. 2 illustrates an example system 200 for improving round-trip time measurements in wireless communication networks. Example system 200 can include one or more access points 205A-205N (sometimes referred to herein as an access point 205) communicatively coupled with one or more stations 215A-215N (sometimes referred to herein as a station 215) that participate in ranging exchanges over one or more networks 210. Any of the systems described in connection with FIGS. 1A-1C can be configured, constructed, or implemented to implement, operate, and/or use any of the options and techniques described in FIG. 2.

The access point 205 can include a device, system, or module (including a combination of hardware and software) that allows wireless communication devices to connect to a wired network using Wi-Fi or other standards. The access point 205 can sometimes be referred to as a wireless access point (WAP). In the context of ranging procedures, the access point 205 can be referred to herein as an initiating station (ISTA) 205 or a responding station (RSTA) 205. The access point 205 can be configured to function as an ISTA 205 or a RSTA 205, depending on the implementation. For example, when functioning as an ISTA 205, the access point 205 can initiate the ranging process. However, when functioning as an RSTA 205, the access point 205 can respond to ranging requests from another station. Ranging can refer to the process of determining the distance and relative position between two devices. For example, ranging can include measuring the time it takes for a signal to travel from one device to another and back.

The access point 205 can include components, such as an antenna for transmitting and receiving wireless signals, a radio device for managing wireless communications, a CPU for processing data and control operations, and memory (DDR) for storing operational data and configurations. The access point 205 can be implemented to support a standard for sending and receiving data using one or more radio frequencies. Those standards, and the frequencies they use can be defined by the IEEE (e.g., IEEE 802.11 standards). The access point 205 can be configured and/or used to support Internet hotspots, and/or on a network to extend the network's Wi-Fi signal range. It is to be noted that while access points 205 are often used within network infrastructures (e.g., WLANs), in the context of ranging, the access points 205 can participate in ranging procedures with other compliant devices regardless of any network connection or association.

In the context of ranging, the network 210 can represent or specify the wireless communication medium over which ranging exchanges occur between access points 205 and stations 215. The medium can utilize radio frequency (RF) technologies such as Wi-Fi (e.g., 802.11a/b/g/n/ac/ax/be), cellular networks, and other similar wireless communication systems. While ranging exchanges can occur within the context of larger network infrastructures, such as local area networks (LANs), wide area networks (WANs), the Internet, or other interconnected computer networks, the ranging process relies on the properties of the direct wireless link between the participating devices. These larger networks, which can include various computing devices (e.g., computers, servers, routers, network switches) and both hardwired and wireless connections, may not be a prerequisite for ranging.

The station 215 can be a wireless communication device configured for wireless communication in wireless communication networks. The station 215 can be configured to communicate wirelessly with network devices, such as the access point 205, using any of the IEEE standards (e.g., IEEE 802.11 standards). The station 215 can be any of the user devices described in connection with FIGS. 1A-C. In some embodiments, the station 215 can include one or more wireless communication devices 102, as described in FIG. 1A, configured to receive services from a communication system. It is to be noted that while stations 215 are often used within network infrastructures such as LANs, WANs, or cellular networks, in the context of ranging, the station 215 can perform ranging procedures with other compliant devices regardless of any network connection or association.

The access point 205 can include a network interface 220. The network interface 220 can be or include any script, file, program, application, set of instructions, or computer-executable code that can be configured to manage the transmission and reception of requests and responses over the wireless network. The management of requests and responses can operate at the medium access control (MAC) layer and the physical (PHY) layer. At the MAC layer, the network interface 220 can manage medium access control, including scheduling and frame transmission, to facilitate access to the wireless medium. The network interface 220 can include wireless radios, which can manage the transmission and reception of wireless signals at the PHY layer, operating on specific frequencies (e.g., 2.4 GHz or 5 GHz) and supporting various Wi-Fi standards. The PHY layer can include hardware components such as transceivers and modulators that convert digital data into analog or radio frequency (RF) signals for transmission over the network medium. In some embodiments, the network interface 220 can include an Ethernet port, which can provide a primary wired connection point, allowing the access point 205 to connect to a router or switch within the wired network. The network interface 220 can further include antenna(s), which can enhance the wireless signal strength and coverage area. The network interface 220 can include onboard processors and memory, which can manage data flow between wired and wireless networks, facilitate encryption and decryption, and run the firmware that controls the access point's functions. The network interface 220 can include firmware and a software interface, which can provide the operating system and configuration settings that allow administrators to manage the access point 205, set up security protocols, and improve performance.

During the initial negotiations of a ranging procedure, the network interface 220 can receive an FTM (fine timing measurement) request frame from another station. An FTM request frame is a type of action frame used in wireless communication systems to initiate a fine timing measurement procedure, which is used to accurately determine the round-trip time between devices. The FTM request frame can initiate the establishment of a communication link for the subsequent ranging exchange. Upon receiving the FTM request frame, the other device or station can transmit an FTM frame to indicate the capabilities that can be used in the ranging session. After the initial exchange, the access point 205, functioning as an ISTA 205 or an RSTA 205 in the ranging process, can participate in the FTM exchange with the other station. The FTM exchange can be configured for time of flight (TOF) measurements to determine the RTT. The RTT can refer to the time taken for a signal (e.g., a data packet) to travel from one device to another and back again. The FTM exchange can include multiple frames transmitted between the access point 205 and the other station or device according to the FTM protocol. In some embodiments, the FTM exchange can be used for a handshake to indicate the use of an NDPA frame with additional fields. The FTM frame can include a bit that indicates whether the ISTA 205 supports enhanced ranging mechanisms. In this regard, a custom NDPA format can be utilized, incorporating information elements (IEs) to indicate the inclusion or omission of specific frames, such as the location measurement report (LMR), initiator-to-responder (I2R), and responder-to-initiator (R2I) frames, during the ranging process. If the RSTA 205 responds with a capability indication that it also supports the custom NDPA format, the ISTA 205 and RSTA 205 can proceed with the negotiated format for the subsequent ranging exchanges.

The network interface 220 can facilitate the transmission and reception of a null data packet announcement (NDPA) frame. An NDP (null data packet) frame, also known as a null data PPDU (PLCP protocol data unit), is a physical layer (PHY) frame in wireless communication systems that includes a preamble and a PHY header. The NDP frames can be used for channel sounding and beamforming training. Channel sounding can utilize the NDP frames to measure channel characteristics without transmitting user data. An NDPA frame is a control frame used to signal the upcoming transmission of one or more NDP frames. NDPA frames can inform receiving devices that channel sounding or beamforming training is about to occur, allowing them to prepare for the subsequent NDP transmissions. NDPA frames can be used in conjunction with NDP frames. As described herein, NDPA frames can facilitate communication in wireless networks by indicating the initiation of a frame exchange sequence. NDPA frames can provide information such as the intended recipient (e.g., a responding station) and can configure the receiving device for subsequent transmissions, such as NDP (null data packet) frames, during measurement. The network interface 220 can manage the transmission and reception of the NDPA frame for a multi-burst ranging exchange. In the context of wireless communication, ranging can measure the distance between devices to support positioning and timing. When transmitting the NDPA frame, the network interface 220 can implement modulation, encoding, and transmission of the radio frequency (RF) signal over the wireless medium. When the network interface 220 of the RSTA 205 receives the NDPA frame, the network interface 220 can implement reception, demodulation, and decoding of the signal to recover or identify the data associated with the NDPA frame. The recovered or parsed data, including an indicator field intended to control the RSTA's transmission behavior during a first burst of a measurement sequence, can be passed to the higher layers (e.g., the ranging protocol stack) for further processing and interpretation. A measurement sequence can refer to a series of frame exchanges between the ISTA 205 and the RSTA 205 to determine the distance between them. The measurement sequence can be divided into multiple bursts, with each burst including frame exchanges that contribute to the measurement process. A burst can refer to a group of frames or packets transmitted in succession as part of a measurement sequence, with the first burst indicating the initial set of frames at the beginning of the sequence.

The higher layers can determine, based on the indicator field (e.g., a single-bit flag or a multi-bit field), whether the network interface 220 of the RSTA 205 can skip or proceed with a location measurement report (LMR) frame communication. Skipping communication can refer to intentionally omitting certain data exchanges to streamline the process and reduce overhead. For example, in a single-bit flag implementation, a value of "0" can indicate that the LMR frame is not desired, and the higher layers can instruct the network interface 220 not to transmit the LMR frame for the first burst, for instance. A value of "1" can indicate that the LMR frame is desired, and the higher layers can instruct the network interface 220 of the RSTA 205 to transmit the LMR frame. In some embodiments, the LMR frame, including information such as parameters or other data, can be transmitted during the first burst for various operational purposes, including secure ranging operations, data synchronization, and quality of service monitoring, among others. Secure ranging can refer to the process of measuring the distance between two devices while providing the integrity, authenticity, and confidentiality of the ranging data. Secure ranging can be important in environments where security is a concern, such as in financial transactions, access control systems, or secure communications.

The network interface 220 of the ISTA 205 and the RSTA 205 can manage the transmission and reception of subsequent frames during the ranging exchange. The network interface 220 can facilitate the exchange of various frame types, such as initiator-to-responder (I2R) NDP frames and responder-to-initiator (R2I) NDP frames, during one or more bursts after the first burst. The I2R NDP frame and R2I NDP frame are specific frames used in nontrigger-based (non-TB) sensing measurement instances in wireless networks. The I2R NDP frame is transmitted by the ISTA 205 to initiate a measurement exchange, and the R2I NDP frame is transmitted by the RSTA 205 in response to the I2R NDP frame. These frames can facilitate FTM and RTT calculations without relying on trigger-based scheduling mechanisms. For example, trigger-based ranging can refer to a process where an access point or central controller transmits a trigger frame to initiate the ranging process, and non-TB ranging can refer to a process where the ISTA 205 can initiate the ranging process by transmitting a frame (e.g., standard data frames used in Wi-Fi communication) to the RSTA 205. The frame exchanges can provide timing information for RTT calculations or measurements. The network interface 220 of the ISTA 205 can transmit the I2R NDP frame over the wireless medium to the RSTA 205. The transmission of the I2R NDP frame can be timed relative to the preceding NDPA frame. For example, the network interface 220 can transmit the I2R NDP frame with a timing offset corresponding to a short interframe space (SIFS) gap relative to the transmission of the ranging NDPA frame. The SIFS gap, managed by the network interface 220, can provide spacing between frames, preventing collisions and allowing the RSTA 205 sufficient time to process the incoming I2R NDP frame before its network interface 220 is configured for the next transmission.

Upon receiving the I2R NDP frame, the network interface 220 of the RSTA 205 can recover or identify the data associated with the I2R NDP frame. The network interface 220 of the RSTA can transmit an R2I NDP frame back to the ISTA 205. The transmission of the R2I NDP frame by the network interface 220 of the RSTA 205 can also be timed with a specific offset. For example, the network interface 220 of the RSTA 205 can transmit the R2I NDP frame in response to the received I2R NDP frame, with a timing offset also corresponding to a SIFS gap relative to the I2R NDP frame. The SIFS gap between the I2R and R2I transmissions can facilitate frame separation and accurate timing measurements. The timing information derived from the exchange of I2R and R2I NDP frames can be used by higher layers to determine or refine the RTT between the ISTA 205 and RSTA 205. Frame exchange can occur across multiple bursts, with each I2R/R2I exchange providing timing information that can be used to refine the RTT calculations or to mitigate the effects of multipath propagation and other channel impairments.

The network interface 220 of the ISTA 205 can manage the transmission of the NDPA frame to the RSTA 205, where the NDPA frame can be used to control the exchange of I2R and R2I NDP frames for a last burst of the measurement sequence. The last burst of the measurement sequence can refer to the final set of frames or packets exchanged during a measurement session. The last burst can mark or indicate the conclusion of the data collection phase for a specific measurement instance and occurs after all preceding bursts have been transmitted and received. The network interface 220 of the ISTA 205 can transmit the NDPA frame, configured to target the last burst of the measurement sequence, over the wireless medium. The transmission of the NDPA frame can occur prior to the last burst, at a time where the I2R and R2I exchanges would normally take place. The network interface 220 can transmit a signal carrying or indicating the NDPA frame over the wireless medium. Upon receiving the NDPA frame, the network interface 220 of the RSTA can decode or parse the signal to recover or identify the data associated with the NDPA frame. The recovered data, including an indicator field, can be passed to higher layers for processing. The network interface 220 of the RSTA can receive instructions from the higher layers regarding subsequent transmissions. If instructed by higher layers based on an indicator, the network interface 220 of the RSTA 205 can skip or suppress the transmission of the I2R and R2I NDP frames for the last burst. However, if instructed by higher layers to proceed with I2R/R2I frame exchange, the network interface 220 of the RSTA 205 can perform the transmission and reception operations. In some embodiments, the network interface 220 of the RSTA 205 can transmit an LMR frame during the last burst, which may include an indicator to indicate to the ISTA 205 that the I2R and R2I NDP frame exchange has been skipped.

The network interface 220 of the RSTA 205 can transmit the LMR frame to the ISTA 205. The LMR frame can refer to a data frame transmitted during the ranging process in wireless communication systems. The LMR frame can include timing and measurement data, which can be used to determine the distance between the ISTA 205 and the RSTA 205. The LMR frame can carry or include timing information derived from the preceding burst(s), which can be subsequently used by the ISTA 205 to determine the RTT. The content of the LMR frame, as transmitted by the network interface 220, can vary depending on whether the frame is transmitted in a second burst or the last burst of the measurement sequence. For example, when the network interface 220 transmits the LMR frame in the last burst of the sequence, the LMR frame can include timing information from the I2R and R2I NDP frames of the preceding burst (e.g., the burst immediately before the last burst). Similarly, when the network interface 220 transmits the LMR frame in a second burst of a multi-burst exchange, the LMR frame can include timing information derived from the I2R and R2I NDP frames exchanged during the first burst. The timing information, which is included in the LMR frame transmitted by the network interface 220, can be obtained or derived using various techniques, including time of flight (TOF) measurements, time difference of arrival (TDOA) calculations, and phase measurements. TOF can measure the time it takes for a signal to travel between the ISTA and RSTA. TDOA can measure the difference in arrival times of a signal at multiple receivers. Phase measurements can provide timing information based on the phase of the received signal. These techniques, alone or in combination, provide the data from which the RTT can be determined.

The access point 205 can include a ranging protocol stack 225. The ranging protocol stack 225 can be or include any script, file, program, application, set of instructions, or computer-executable code that can be configured to facilitate a specific ranging protocol. The ranging protocol stack 225 can be configured to manage the exchange of various ranging frames, such as NDPA, I2R, R2I, and LMR frames. The ranging protocol stack 225 can include one or more layers, each configured for different aspects of the ranging protocol. The ranging protocol stack 225 can manage high-level logic and control of the ranging process, including initiating or responding to ranging requests. The ranging protocol stack 225 can implement specific protocols and standards governing frame exchanges to maintain compliance with IEEE 802.11az or other relevant standards. The ranging protocol stack 225 can manage the generation and processing of frames, such that various frame types (e.g., NDPA, I2R, R2I, and LMR) are correctly formatted and processed. The ranging protocol stack 225 can implement mechanisms for error detection and correction of frame exchanges.

In some embodiments, the ranging protocol stack 225 can support sniffing detection by evaluating network traffic. Sniffer capture can refer to the process of using a network sniffer (or packet analyzer) to monitor and capture the data packets exchanged between the ISTA 205 and the RSTA 205 during the ranging process. For example, the ranging protocol stack 225 can be configured to evaluate the frame exchanges to detect enhancements, such as reducing frame exchanges during RTT bursts.

The ranging protocol stack 225 can be configured to generate an NDPA frame for ranging. The ranging protocol stack 225 can configure the NDPA frame to include specific fields, such as a ranging bit or flag, a specific frame type or subtype, or a specific identifier or sequence number. Upon receiving the NDPA frame, the ranging protocol stack 225 of the RSTA 205 can parse or process the NDPA frame. Upon processing the NDPA frame, the ranging protocol stack 225 of the RSTA 205 can trigger the internal ranging mechanisms, which can then initiate ranging or subsequent ranging bursts. The ranging sequence, managed by the ranging protocol stacks 225 of ISTA 205 and RSTA 205, can include exchanging timing information, such as timestamps, performing measurements (e.g., time-of-flight or time-difference-of-arrival), and calculating, determining, or measuring the RTT between the devices to determine their relative distance.

The ranging protocol stack 225 of the RSTA 205 can process the NDPA frame to determine whether to skip communicating the LMR frame for the first burst. The ranging protocol stack 225 of the ISTA 205 can configure the NDPA frame to include an indicator field to control the RSTA's transmission behavior during the first burst of a multi-burst ranging exchange. The ranging protocol stack 225 of the RSTA can parse the received NDPA frame to identify the indicator. In some embodiments, the indicator, managed by the ranging protocol stack 225, can be implemented as a single-bit flag or a multi-bit field to accommodate varying levels of control. In a single-bit flag implementation, the ranging protocol stack 225 of the RSTA 205 interprets a value of "0" as an instruction to skip transmitting the LMR frame for the first burst, for instance. A value of "1" can indicate that the LMR frame is desired for the first burst, causing the ranging protocol stack 225 of the RSTA 205 to configure the LMR frame for transmission, which can include information such as security parameters or other data for secure ranging.

The ranging protocol stacks 225 of the ISTA 205 and RSTA 205 can manage the exchange of frames during one or more bursts after the first burst to obtain or receive timing information used in RTT calculations or measurements. This exchange of frames, managed by the respective ranging protocol stacks 225, can include I2R NDP frames and R2I NDP frames. The ranging protocol stack 225 of the ISTA 205 can initiate the exchange by generating and queuing an I2R NDP frame for transmission. The ranging protocol stacks 225 of the ISTA and RSTA can manage the timing of the I2R NDP frame transmission relative to the preceding NDPA frame. For example, the ranging protocol stack 225 of the ISTA 205 can configure the I2R NDP frame to be transmitted with a timing offset corresponding to a short interframe space (SIFS) gap relative to the transmission of the ranging NDPA frame.

Upon reception of the I2R NDP frame, the ranging protocol stack 225 of the RSTA 205 can process the received frame and extract a timestamp. The ranging protocol stack 225 of the RSTA 205 can generate and queue an R2I NDP frame for transmission back to the ISTA 205. The ranging protocol stack 225 can manage the timing of the R2I NDP frame transmission with a specific offset. For example, the ranging protocol stack 225 of the RSTA 205 can configure the R2I NDP frame to be transmitted in response to the received I2R NDP frame, with a timing offset also corresponding to a SIFS gap relative to the I2R NDP frame. The ranging protocol stacks 225 of both the ISTA and RSTA can extract timestamps from the received I2R and R2I NDP frames, respectively. The timing information derived from the exchange of I2R and R2I NDP frames, as extracted by the ranging protocol stacks 225, can used to determine or refine the RTT between the ISTA and RSTA. Frame exchange can occur across multiple bursts, with each I2R/R2I exchange providing timing information that can be extracted by the ranging protocol stacks 225 and used to refine the RTT calculations.

The ranging protocol stack 225 of the ISTA 205 can generate an NDPA frame with an indicator to control the RSTA's operation regarding the I2R and R2I NDP frame exchange for a last burst. For example, the ranging protocol stack 225 of the ISTA 205 can configure the NDPA frame to target the last burst of the measurement sequence. The ranging protocol stack 225 of the ISTA 205 can include an indicator within the NDPA frame to instruct or cause the RSTA 205 to skip or omit the I2R and R2I NDP frame exchange for the last burst. The ranging protocol stack 225 of the RSTA 205 can process the received NDPA frame and identify the indicator. If the indicator, as interpreted by the ranging protocol stack 225 of the RSTA 205, is set to a specific value (e.g., "0"), the ranging protocol stack 225 of the RSTA 205 can determine that the I2R and R2I NDP frames can be skipped or suppressed for the last burst. If the value is set to "1", the indicator, as interpreted by the ranging protocol stack 225 of the RSTA 205, can indicate that I2R and R2I exchanges are expected in the burst. In some embodiments, the ranging protocol stack 225 of the RSTA 205 can configure the LMR frame transmitted during the last burst to include an indicator that indicates to the ISTA 205 that the I2R and R2I NDP frame exchange has been skipped.

The ranging protocol stack 225 of the RSTA 205 can collect or retrieve timing information (timestamps) from the I2R/R2I exchanges of previous burst(s) and format that information into an LMR frame. The content of the LMR frame, as configured by the ranging protocol stack 225, can vary depending on whether the frame is transmitted in a second burst or the last burst of the measurement sequence. For example, when delayed LMR reporting is used, and the LMR frame is transmitted in the last burst of the sequence, the ranging protocol stack 225 can configure the LMR frame to include timing information from the I2R and R2I NDP frames of the preceding burst (e.g., the burst immediately before the last burst). In this regard, delayed LMR reporting can refer to postponing the inclusion of timestamps in LMR frames to a later time in the sequence to accommodate the processing delays. Similarly, when the LMR frame is transmitted in a second burst of a multi-burst exchange, the ranging protocol stack 225 can configure the LMR frame to include timing information derived from the I2R and R2I NDP frames exchanged during the first burst.

The access point 205 can include a synchronization unit 230. The synchronization unit 230 can be or include any script, file, program, application, set of instructions, or computer-executable code that can be configured to provide timing information for accurate ranging. The synchronization unit 230 can generate timestamps associated with the transmission and reception of ranging frames (e.g., I2R, R2I) by the network interface 220. The timestamps can be used to calculate the time of flight (TOF) and the round-trip time (RTT). The synchronization unit 230 can implement mechanisms to compensate for clock drift between the access point 205 and other ranging stations. For example, the synchronization unit 230 can implement frequency synchronization, time synchronization protocols, or other calibration methods to synchronize the timing of transmitted and received signals.

The synchronization unit 230 can be configured to determine the RTT. The RTT determination can include multiple bursts of frame exchanges. Each burst can include a sounding phase and a reporting phase. During the sounding phase, the ISTA 205 and RSTA 205 can exchange ranging frames, such as I2R and R2I NDP frames. During the reporting phase, the RSTA 205 can transmit the LMR frame to the ISTA 205. The synchronization unit 230 of the ISTA 205 can determine the RTT based on the received LMR frame. The synchronization unit 230 can extract the timing information from the LMR frame for the calculation. During the sounding phase of each ranging burst, the synchronization unit 230 can generate timestamps for the transmission of the I2R NDP frame and the reception of the R21 NDP frame. These timestamps can be used to calculate the time of flight (TOF). For example, the synchronization unit 230 can calculate the TOF by measuring the time taken for a signal to travel from the ISTA 205 to the RSTA 205 and back, accounting for any delays caused by the RSTA 205.

In some embodiments, in response to the last burst, the synchronization unit 230 can be used in conjunction with the ranging protocol stack 225 to process the LMR frame and extract timing information derived from the preceding bursts of frame exchanges. The RSTA 205 can also include a synchronization unit 230 to timestamp the reception of the I2R and the transmission of the R2I. The RSTA 205 can transmit its processing time to the ISTA 205 via the LMR frame. The synchronization unit 230 of the ISTA 205 can utilize the timing information from RSTA 205, along with its own timestamps, to account for the RSTA's processing time. The synchronization unit 230 of the ISTA 205 can determine the RTT based on the combined data.

The synchronization unit 230 can provide timing support for various ranging techniques, including time difference of arrival (TDOA) and phase measurements. For TDOA, multiple receivers, each with its own synchronization unit 230, can provide timestamps for signal arrival times. These timestamps can be compared at a central processing location to calculate the time differences, which can be used to estimate a device's location. For phase measurements, the synchronization unit 230 can provide a time base to track phase changes in received signals, which can be used to calculate the distance traveled. The synchronization unit 230 can also provide timestamps used to calibrate phase measurements and compensate for frequency offsets between transmitting and receiving devices.

As shown in FIG. 2, the station 215 can include a network interface 220, a ranging protocol stack 225, and a synchronization unit 230. The station 215 can function as an initiating station (ISTA) 205 or a responding station (RSTA) 205, depending on the implementation. The network interface 220, ranging protocol stack 225, and synchronization unit 230 of the station 215 can be similar to, and include any of the structure and functionality of, their respective counterparts, such as the network interface 220, ranging protocol stack 225, and synchronization unit 230 of the access point 205, as described above.

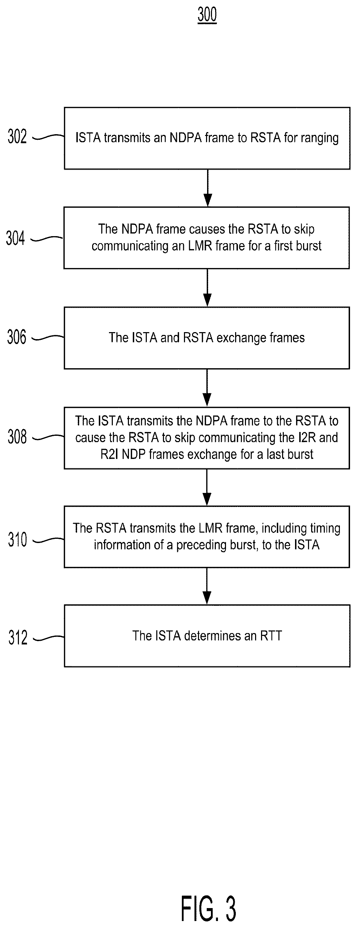

FIG. 3 illustrates an example method 300 of improving round-trip time measurement in wireless communication networks. The method 300 can be implemented using a system 100, 200, or any other features discussed in FIGS. 1-2. The method 300 can include acts 302-312. At 302, an initiating station (ISTA) can transmit a null data packet announcement (NDPA) frame to a responding station (RSTA)for ranging. At 304, the NDPA frame can cause the RSTA to skip communicating a location measurement report (LMR) frame for a first burst. At 306, the ISTA and RSTA can exchange frames. At 308, the ISTA can transmit the NDPA frame to the RSTA to cause the RSTA to skip communicating the I2R and R2I NDP frames exchange for a last burst. At 310, the RSTA can transmit the LMR frame, including timing information of a preceding burst, to the ISTA. At 312, the ISTA can determine a round-trip time (RTT).

At 302, the ISTA can transmit the NDPA frame to the RSTA for ranging. Ranging can refer to the process of determining the distance between two devices by using the time it takes for a signal to travel from one device to another and back. In the context of wireless communication, ranging can measure the distance between devices to facilitate positioning and timing. An NDP (null data packet) frame, also known as a null data PPDU (PLCP protocol data unit), is a physical layer (PHY) frame in wireless communication systems that includes a preamble and a PHY header. The NDP frames can be used for channel sounding and beamforming training. Channel sounding can utilize the NDP frames to measure channel characteristics without transmitting user data. An NDPA frame is a control frame used to signal the upcoming transmission of one or more NDP frames. NDPA frames can inform receiving devices that channel sounding or beamforming training is about to occur, allowing them to prepare for the subsequent NDP transmissions. NDPA frames can be used in conjunction with NDP frames. The NDPA frame can include specific fields, such as a specific ranging bit or flag, a specific frame type or subtype, or a specific identifier or sequence number. The ISTA can transmit the NDPA frame over the wireless channel to the RSTA, which then receives and parses or processes the frame to identify the ranging intent. Upon processing the NDPA frame, the RSTA can trigger its internal ranging mechanisms, which initiate ranging or subsequent ranging bursts. This sequence can include exchanging timing information, such as timestamps, performing measurements (e.g., time-of-flight or time-difference-of-arrival), and calculating, determining, or measuring the RTT between the devices to determine their relative distance.

At 304, the NDPA frame can cause the RSTA to skip communicating the LMR frame for the first burst. The NDPA frame can include an indicator field that can control the RSTA's transmission operation during the first burst of a multi-burst ranging exchange. A burst can refer to a group of frames or packets that can be transmitted in succession as part of a measurement sequence, with the first burst indicating the initial set of frames at the beginning of the sequence. The ISTA can transmit the NDPA frame to the RSTA for the first burst and can provide an indicator in the NDPA frame that can cause the RSTA to skip or proceed with the LMR frame communication. The RSTA can parse the received NDPA frame to identify the indicator. The indicator can be implemented as a single-bit flag or a multi-bit field to accommodate varying levels of control. In a single-bit flag implementation, a value of "0" can specify that the LMR frame is not desired, causing the RSTA to skip transmitting the LMR frame for the first burst. In some embodiments, a value of "1" can indicate that the LMR frame is desired for the first burst, causing the RSTA to transmit the LMR frame, which can include information such as security parameters or other data for secure ranging. Secure ranging can refer to the process of measuring the distance between two devices while providing the integrity, authenticity, and confidentiality of the ranging data.

At 306, the ISTA and RSTA can exchange frames. The ISTA and RSTA can exchange frames during one or more bursts after the first burst to obtain or determine timing information used in RTT calculations or measurements. This subsequent exchange of frames can include various frame types, such as initiator-to-responder (I2R) NDP frames and responder-to-initiator (R2I) NDP frames. The ISTA can initiate the frame exchange by transmitting an I2R NDP frame to the RSTA. The transmission of the I2R NDP frame can be timed relative to the preceding NDPA frame. For example, the I2R NDP frame can be transmitted with a timing offset corresponding to a short interframe space (SIFS) gap relative to the transmission of the ranging NDPA frame. The SIFS gap can provide spacing between frames, preventing collisions and allowing the RSTA sufficient time to process the incoming frame before the next or subsequent transmission.

Upon receiving the I2R NDP frame, the RSTA can respond by transmitting an R2I NDP frame back to the ISTA. The R2I NDP frame can be transmitted with a timing offset. For example, the R2I NDP frame can be transmitted in response to the received I2R NDP frame, with a timing offset also corresponding to a SIFS gap relative to the I2R NDP frame. The SIFS gap between the I2R and R2I transmissions can facilitate frame separation and accurate timing measurements. The timing information derived from the exchange of I2R and R2I NDP frames can be used to determine or refine the RTT between the ISTA and RSTA. For example, the transmission and reception times of these frames, controlled by the SIFS gaps, can allow for accurate determination of signal propagation delay. Frame exchange can occur across multiple bursts, with each I2R/R2I exchange providing timing information that can be used to refine the RTT calculations or to mitigate the effects of multipath propagation and other channel impairments.

At 308, the ISTA can transmit the NDPA frame to the RSTA to cause the RSTA to skip communicating the I2R and R2I NDP frames exchange for a last burst. The NDPA frame can be configured to target the last burst of the measurement sequence and manage the exchange of I2R and R2I NDP frames. For example, the ISTA can transmit the NDPA frame to signal the RSTA to skip or omit the I2R and R2I NDP frame exchange for the last burst. The transmission of the NDPA frame can occur prior to the last burst, where the I2R and R2I exchanges would take place. The NDPA frame can indicate to the RSTA that such exchanges are not desired for this particular ranging measurement. In some embodiments, the ISTA can provide an indicator in the NDPA frame to transmit the instruction to the RSTA to skip communicating the I2R and R2I NDP frames. Upon receiving the NDPA frame, the RSTA can parse the frame and identify the indicator. If the indicator is set to a specific value (e.g., "0"), the RSTA can skip or suppress the transmission of the I2R and R2I NDP frames for the last burst. If the value is set to "1", the indicator can indicate that I2R and R2I exchanges are expected in the burst. In some embodiments, the RSTA can include in the LMR frame transmitted during the last burst an indicator that signals to the ISTA that the I2R and R2I NDP frame exchange has been skipped. The LMR-based indicator can provide an additional layer of confirmation. For example, the LMR frame indicator can be used for error detection and recovery, or in situations where the NDPA frame may not have been reliably received.

At 310, the RSTA can transmit the LMR frame, including timing information of the preceding burst, to the ISTA. The LMR frame can include or carry timing information derived from the preceding burst(s), which the ISTA uses to determine the RTT. The content of the LMR frame can vary, depending on whether the frame is transmitted in a second burst or the last burst of the measurement sequence. For example, when the LMR frame is transmitted in the last burst of the sequence, the LMR frame can include timing information from the I2R and R2I NDP frames of the preceding burst (e.g., the burst immediately before the last burst). Similarly, when the LMR frame is transmitted in a second burst of a multi-burst exchange, the LMR frame can include timing information derived from the I2R and R2I NDP frames exchanged during the first burst. The timing information can be obtained or derived using various techniques, including the time of flight (TOF) measurements, time difference of arrival (TDOA) calculations, and phase measurements, among others. TOF can be used to measure the time it takes for a signal to travel between the ISTA and RSTA. TDOA can be used to measure the difference in arrival times of a signal at multiple receivers. Phase measurements can be used to provide timing information based on the phase of the received signal. These techniques, alone or in combination, can provide the data from which the RTT can be determined.

At 312, the ISTA can determine the RTT. The ISTA can determine the RTT based on the information received in the LMR frame(s), such as the LMR frame received in response to the last burst. The RTT can correspond to the total time taken for a signal to travel from the ISTA to the RSTA and back to the ISTA. The RTT can be calculated based on the time taken for frames to travel between the ISTA and RSTA. The determination can include multiple bursts of frame exchanges, each burst including a measurement sounding phase and a measurement reporting phase. The sounding phase can include the transmission of ranging frames, such as I2R and R2I NDP frames, between the ISTA and RSTA. The reporting phase can include the RSTA transmitting the LMR frame back to the ISTA, including the timing information collected during the sounding phase. The LMR frame received by the ISTA in response to the last burst can include timing information derived from the preceding burst's frame exchanges. This timing information can be determined using various techniques, including TOF measurements, TDOA calculations, and phase measurements.

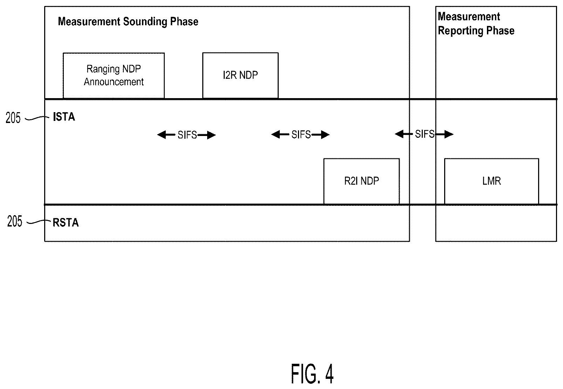

Referring now to FIG. 4, depicted is a ranging measurement exchange sequence between an initiating station (ISTA) 205 and a responding station (RSTA) 205, as described in connection with FIGS. 2-3. The ranging measurement exchange sequence can utilize fine time measurements, including time of flight (TOF), time difference of arrival (TDOA), and phase measurements. As shown, during the measurement sounding phase, the ISTA 205 can initiate the ranging process by transmitting a ranging NDP announcement (NDPA) frame to the RSTA 205, followed by an I2R NDP frame after a short interframe space (SIFS) interval. Upon receiving the ranging NDPA frame, the RSTA 205 can respond with an R2I NDP frame after another SIFS interval. During the measurement reporting phase, the RSTA 205 can transmit a location measurement report (LMR) frame back to the ISTA 205. The LMR frame can carry timing information derived from the measurement exchange to calculate range, relative distance, and direction. The timing information in the LMR frame can correspond to the current sounding phase for immediate feedback or the previous sounding phase for delayed feedback.

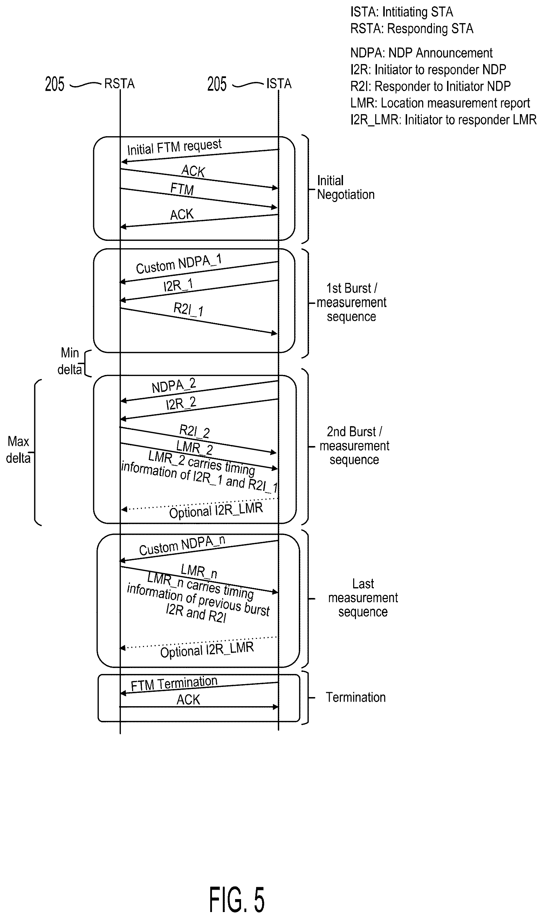

Referring now to FIG. 5, depicted is an example implementation of a ranging measurement exchange sequence to decrease frame exchanges during round-trip time (RTT) bursts, as described in connection with FIGS. 2-4. Each burst can include a measurement sounding phase and a measurement reporting phase. A complete measurement sequence can include "n" bursts to calculate RTT with delayed location measurement report (LMR) frame transmission. As shown, during the initial negotiation, the ISTA 205 can initiate the ranging with an FTM request and ACK exchanges. In the first burst, the ISTA 205 can transmit a custom NDPA_1 frame, and subsequently, an I2R_1 (initiator-to-responder) NDP frame, where the custom NDPA_1 frame can include an indicate field that indicates that no LMR frame is desired in response to this burst. The RSTA 205, upon receiving the custom NDPA_1 frame and I2R_1 NDP frame, can respond with an R2I_1 frame. In subsequent bursts, such as the second burst, the NDPA frame can trigger I2R_2 and R2I_2 NDP frames, and LMR_2 frame can be transmitted by the RSTA 205 carrying timing information for the previous burst (I2R_1 and R2I_1), with an optional I2R_LMR frame exchange.

The timing intervals between bursts can be governed by minimum and maximum delta values to maintain proper system operation and mitigate potential interference. For example, the minimum and maximum delta values can regulate the synchronization of frame exchanges to provide sufficient processing time for ISTA 205 and RSTA 205 to process the frames and perform accurate timing measurements. For the last burst, the ISTA 205 can transmit a custom NDPA_n frame to the RSTA 205. The custom NDPA_n frame can include an indicator that indicates that I2R and R2I exchanges are not desired for the last burst. In response to receiving the custom NDPA_n frame, the RSTA 205 can skip I2R and R2I NDP frame exchanges and transmit an LMR_n frame, which can carry timing data for the previous burst (I2R_n-1 and R2I_n-1). If the LMR frame is not received by the ISTA 205 within a specified timeout before the last burst concludes, the burst can be considered incomplete, prompting corrective actions, such as triggering retransmission or other actions. The ranging can conclude with an exchange of FTM frames to perform timing measurements and synchronization before proceeding to the next ranging operation.

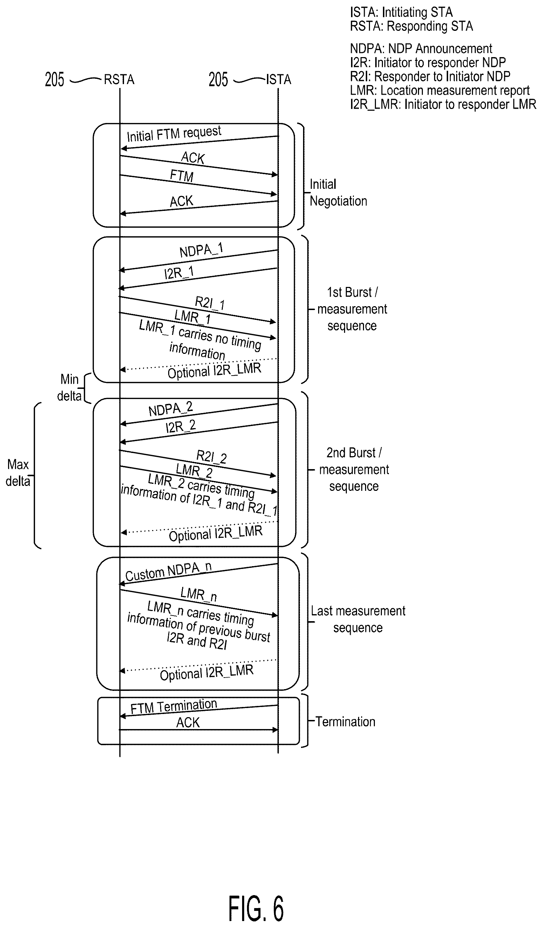

Referring now to FIG. 6, depicted is another example implementation of a ranging measurement exchange sequence to decrease frame exchanges during round-trip time (RTT) bursts, as described in connection with FIGS. 2-5. Each burst in this implementation can include a measurement sounding phase and a measurement reporting phase. Similar to FIG. 5, FIG. 6 may share the structure and functionality depicted therein but differs in its inclusion of a location measurement report (LMR) frame in the first burst for various operational purposes, including secure ranging operations, data synchronization, and quality of service monitoring, among others. In a non-limiting example, the LMR frame in the first burst can provide timing or security-related information for specific use cases. Secure ranging can refer to the process of determining the distance between two devices while maintaining the integrity, authenticity, and confidentiality of the ranging data.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood as open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A system, comprising:
an initiating station (ISTA) comprising one or more processors, coupled with memory, to:
transmit, to a responding station (RSTA), for a first burst of a measurement sequence, a null data packet announcement (NDPA) frame to cause the RSTA to skip communicating, to the ISTA, a location measurement report (LMR) frame for the first burst;
transmit, to the RSTA, during one or more bursts after the first burst of the measurement sequence, an initiator-to-responder (I2R) NDP frame;
receive, from the RSTA, during the one or more bursts after the first burst, a responder-to-initiator (R2I) NDP frame responsive to the I2R NDP frame,
transmit, to the RSTA, for a last burst of the measurement sequence, the NDPA frame to cause the RSTA to skip communicating the I2R and R2I NDP frames exchange between the ISTA and the RSTA for the last burst;
receive, from the RSTA, during the last burst, the LMR frame for the last burst; and
determine, in response to receiving the LMR frame for the last burst, a round-trip time (RTT) between the ISTA and the RSTA.

2. The system of claim 1, wherein
the one or more processors are further configured to provide, in the NDPA frame, an indicator that, upon identification, causes the RSTA to skip the LMR frame communication for the first burst.

3. The system of claim 1 or 2, wherein
the one or more processors are further configured to provide, in the NDPA frame, an indicator that, upon identification, causes the RSTA to skip communicating the I2R and R2I NDP frames.

4. The system of any one of the claims 1 to 3, wherein
the one or more processors are further configured to transmit the I2R NDP frame with a timing offset corresponding to a short interframe space (SIFS) gap relative to the transmission of the NDPA frame.

5. The system of any one of the claims 1 to 4, wherein
the LMR frame comprises timing information, the one or more processors are further configured to determine the RTT between the ISTA and RSTA based on the timing information;
wherein in particular
the one or more processors are further configured to determine the timing information using time of flight (TOF) time difference of arrival and phase measurement.

6. The system of any one of the claims 1 to 5, wherein
the LMR frame for a second burst comprises timing information of the I2R and R2I NDP frames of the first burst.

7. The system of any one of the claims 1 to 6, wherein
the LMR frame for the last burst comprises timing information of the I2R and R2I NDP frames of a preceding burst.

8. The system of any one of the claims 1 to 7, wherein
the one or more processors are further configured to transmit, to the RSTA, for the first burst of the measurement sequence, the NDPA frame to cause the RSTA to communicate, to the ISTA, the LMR frame.

9. A system, comprising:
a responding station (RSTA) comprising one or more processors, coupled with memory, to:
receive, from an initiating station (ISTA), for a first burst of a measurement sequence, a null data packet announcement (NDPA) frame, the NDPA frame causing the RSTA to skip communicating, to the ISTA, a location measurement report (LMR) frame for the first burst;
receive, from the ISTA, during one or more bursts after the first burst of the measurement sequence, an initiator-to-responder (I2R) NDP frame;
transmit, to the ISTA, during the one or more bursts after the first burst, a responder-to-initiator (R2I) NDP frame;
generate, in response to receiving the R2I NDP frame, the LMR frame for a second burst;
receive, from the ISTA, for a last burst of the measurement sequence, the NDPA frame causing the RSTA to skip communicating the I2R and R2I NDP frames exchange between the ISTA and the RSTA for the last burst; and
transmit, to the ISTA, during the last burst, the LMR frame for the last burst.

10. The system of claim 9, wherein
the one or more processors are further configured to transmit the R2I NDP frame in response to the I2R NDP frame, wherein the R2I NDP frame is transmitted with a timing offset corresponding to a short interframe space (SIFS) gap relative to the I2R NDP frame.

11. The system of claim 9 or 10, wherein
the one or more processors are further configured to provide, in the LMR frame transmitted to the ISTA during the last burst, an indicator indicating the skipping of I2R and R2I NDP frames exchange for the last burst.

12. A method, comprising:
transmitting, by an initiating station (ISTA) to a responding station (RSTA), a null data packet announcement (NDPA) frame for a first burst of a measurement sequence, the NDPA frame causing the RSTA to skip communicating, to the ISTA, a location measurement report (LMR) frame for the first burst;
transmitting, by the ISTA to the RSTA, during one or more bursts after the first burst of the measurement sequence, an initiator-to-responder (I2R) NDP frame;
receiving, by the ISTA from the RSTA, during the one or more bursts after the first burst, a responder-to-initiator (R2I) NDP frame responsive to the I2R NDP frame,
in response to receiving the R2I NDP frame, generating, by the RSTA, the LMR frame for a second burst;
transmitting, by the ISTA to the RSTA, for a last burst of the measurement sequence, the NDPA frame causing the RSTA to skip communicating the I2R and R2I NDP frames exchange between the ISTA and the RSTA for the last burst;
receiving, by the ISTA from the RSTA, during the last burst, the LMR frame for the last burst; and
determining, by the ISTA, a round-trip time (RTT) between the ISTA and the RSTA responsive to receiving the LMR frame for the last burst.

13. The method of claim 12, further comprising:
transmitting the R2I NDP frame in response to the I2R NDP frame, wherein the R2I NDP frame is transmitted with a timing offset corresponding to a short interframe space (SIFS) gap relative to the I2R NDP frame.

14. The method of claim 12 or 13, wherein
the LMR frame comprises timing information, further comprising:
determining the RTT between the ISTA and RSTA based on the timing information;

15. The method of claim 12, 13 or 14, further comprising at least one of the following features:
(A) providing, in the NDPA frame, an indicator that, upon identification, causes the RSTA to skip the LMR frame communication for the first burst:
(B) providing, in the NDPA frame, an indicator that, upon identification, causes the RSTA to skip communicating the I2R and R2I NDP frames;
(C) transmitting the 12R NDP frame with a timing offset corresponding to a short interframe space (SIFS) gap relative to the transmission of the NDPA frame;
(D) wherein the LMR frame for the second burst comprises timing information of the I2R and R2I NDP frames of the first burst.
(E) wherein the LMR frame for the last burst comprises timing information of the I2R and R21 NDP frames of a preceding burst.
